# EUROPEAN PATENT APPLICATION

(11) **EP 4 303 625 A1**
(43) Date of publication of application: **10.01.2024**
(21) Application number: 22183045.8
(22) Date of filing: 05.07.2022
(51) Int. Cl.: G01S 17/10, G01S 17/931, G01S 7/484, G01S 7/487, G01S 7/489

(54) **LIDAR SYSTEM AND METHOD TO OPERATE**

(71) Applicant: Veoneer Sweden AB, 447 37 Vårgårda (SE)
(72) Inventor: HALLSTIG, Emil, 44737 Vårgårda (SE)
(74) Representative: Müller Verweyen

(57) **Abstract**

The invention relates to a lidar system (10) comprising at least one laser source (11) configured to emit laser pulses (15) and to direct said laser pulses (15) in a field of view (16), at least one detector (13) configured to detect reflections (17) of said laser pulses (15), and a control unit (14) configured to perform time-of-flight measurements on said laser pulses (15) and the detected reflections (17). The control unit (14) is configured to control the at least one laser source (11) to emit sequences of laser pulses (15) with at least two sequential laser pulses (15) with a defined inter-pulse timing, wherein the at least one detector (13) is adapted to detect the inter-pulse timing (20) of the reflections (17) of said laser pulses (15), wherein the control unit (14) is configured to determine whether the detected reflections (17) have the same inter-pulse timing (20) as the at least two sequential laser pulses (15).

## Description

The invention relates to a lidar system comprising at least one laser source configured to emit laser pulses and to direct said laser pulses in a field of view, at least one detector configured to detect reflections of said laser pulses, and a control unit configured to perform time-of-flight measurements on said laser pulses and the detected reflections. The invention further relates to a corresponding method.

Lidar systems for autonomous driving (AD) and advanced driver assistance system (ADAS) are well known in the prior art and are able to determine ranges or distances of objects like vehicles, pedestrians or obstacles in the scene around and in particular in front of an ego-vehicle. Lidar systems based on laser pulses are often working in an environment where multiple lidar systems are active at the same time, for example on other vehicles or even on the same vehicle. In this case it is possible that the lidar system cannot distinguish between pulses coming from itself and pulses or reflections coming from other lidar systems which interfere with the ego-lidar system. This can lead to false detections and can impact the performance and reliability of a lidar system.

The object of the invention is to provide a lidar system having an improved interference resistance.

The invention solves the problem with the features of the independent claims. Further preferred embodiments of the invention can be found in the dependent claims and the associated descriptions and drawings.

A lidar system is proposed that comprises at least one laser source configured to emit laser pulses and to direct said laser pulses in a field of view, at least one detector configured to detect reflections of said laser pulses, and a control unit configured to perform time-of-flight measurements on said laser pulses and the detected reflections. It is proposed that the control unit is configured to control the at least one laser source to emit sequences of laser pulses with at least two sequential laser pulses with a defined inter-pulse timing, wherein the at least one detector is adapted to detect the inter-pulse timing of the reflections of said laser pulses, wherein the control unit is configured to determine whether the detected reflections have the same inter-pulse timing as the at least two sequential laser pulses.

The inter-pulse timing is the time between two sequential laser pulses. The inter-pulse timing is preferably predefined. Nonetheless, in advantageous embodiments the inter-pulse timing may vary between different sequences of laser pulses or between different subsequent laser pulses. Accordingly, the inter-pulse timing can be used as a coding scheme with two or more sequential pulses having a predefined and thus known inter-pulse timing. Thereby, the consistency of the return signal or the reflected pulse can be verified to filter out external pulses. For example, the control unit can be enabled with a decision algorithm to determine signal consistency. Hence, the performance and robustness of lidar system can be improved. In possible embodiments, the inter-pulse timing may be dynamically adjusted by the control unit, for example on the basis of the prior detections of the lidar system and/or other prior detections of separate systems like cameras.

In order to receive reflections having the same inter-pulse timing two sequential laser pulses need a spatial overlap on the detected object or target. Usually, the objects are much larger than the laser point on the object hence even small overlaps or even adjacent points can be used to validate if a point is a true detection or false.

In an advantageous embodiment, this time separation or inter-pulse timing is preferably determined with respect to timing precision as related to pulse length, reflected pulse length and/or sub-pulse resolution.

In an advantageous embodiment, the lidar system comprises an optical device which optical device is configured to direct the laser pulses of one or more laser sources in the field of view.

The optical device is preferably a scanner that is adapted to direct the laser pulses in the field of view, which is in particular advantageous when the lidar system comprises a single laser source. The scanner is preferably adapted to direct light in a two-dimensional field of view.

Further on, said optical device, in particular the optical device being a scanner, is beneficial for a lidar system comprising a single detector, wherein the lidar system is adapted to direct the reflections to the detector. Thereby, the lidar system comprises preferably a coaxial configuration. In other advantageous embodiments, the lidar system may comprise a biaxial configuration.

In an alternative embodiment, the optical device is preferably a lens system adapted to direct the laser pulses in the field of view. Such lens systems are well suited for so called flash lidar systems, in particular solid state flash laser systems. The at least one laser source is preferably a solid-state flash laser whose laser pulses are directed by the lens system in the field of view to create the needed spatial distribution of the laser pulses in the field of view in order to perform the time-of-flight measurement.

It is further proposed that the lidar system comprises a one-dimensional or two-dimensional array of laser sources, in particular solid-state laser sources. It is further proposed that the lidar system comprises a one-dimensional or two-dimensional array of detectors. In preferred embodiments, said arrays of laser sources and detectors are arranged in pairs. Advantageously, said one-dimensional or two-dimensional arrays of laser sources and/or detectors allow to perform lidar measurements or time-of-flight measurements in the field of view without any moving parts. Herein, coaxial, biaxial or multiaxial configurations are possible.

Preferably, the at least one detector is adapted to detect the at least two sequential reflections each with a different sensitivity or gain setting. The sensitivity of the at least one detector is preferably controlled by the gain of the detector. Additionally or alternatively, the sensitivity of the at least one detector is preferably controlled by bundling several sensor elements or detector elements. The control unit is preferably adapted to set the at least one detector to different gains for each reflection of the reflected laser pulse sequence. Two detected reflections with different sensitivity or gain settings of two laser pulses reflected by a target allow for a calculation of the ratio and a better estimation of the reflectance or reflectivity of an object or target. The sequential laser pulses, thus the laser points, have to be on the same object and have to have a certain spatial overlap. In other words, the laser point whose reflection is detected with a low sensitivity or gain has to have an overlap or be adjacent to the laser point whose reflection is detected with a high sensitivity or gain in order to use the time between the two returns and strength of the two returns to filter out false positives. In general, the objects are much larger than the laser point on the object hence even small overlaps or even adjacent points can be used to validate if a point is a true detection or false. This is in particular applicable when both sequential reflections for a lower sensitivity or gain and a higher sensitivity or gain are above a detection threshold and below the saturation level of the at least one detector. Thereby, false positive detections can be further suppressed and the consistency of the detected reflections can be further improved.

Moreover, the dynamic range of the lidar system can be increased for detecting and ranging near and far objects or targets. Accordingly, in situations where a reflection from a target is below the detection threshold of the detector for a certain sensitivity or gain setting, the reflection of the preceding or subsequent pulse may still give a valid measurement for a different, respectively higher, sensitivity or gain setting. Reflections from a target which are above a saturation level of the at least one detector for a certain sensitivity or gain setting may still give a more precise time-of-flight measurement for a different, respectively lower, sensitivity or gain setting.

In a further development of the lidar system, it is proposed that the at least two sequential laser pulses with a defined inter-pulse timing of a sequence have a defined difference in pulse energy and/or pulse length, wherein the at least one detector is adapted to detect the energy and/or or length of the reflections of said laser pulses, wherein the control unit is configured to determine whether the detected reflections have a difference in energy and/or length corresponding to the at least two sequential laser pulses.

This further increases the robustness of the lidar system to interference from other lidar systems or external light sources in general. Therefore, the above-described coding scheme can be further enhanced with a predefined pulse energy and/or pulse length for the laser pulses of a sequence, which can be checked for consistency with the received reflections by the lidar system, in particular by the control unit. This is in particular beneficial in combination with different sensitivity or gain settings for each reflection. The return signals or reflections can be verified to filter out external pulses.

In contrast, coding of single laser pulses is not suitable due to the need for short pulses in order to have sufficient resolution of the lidar system in a given time frame and due to laser power limitations with regard to eye safety and the detectability limits of reflected signals.

It is further proposed that the control unit is adapted to adjust a sensitivity or gain setting of the at least one detector on the basis of a detection of a reflection of a laser pulse for the at least one subsequent reflection of the subsequent laser pulse of the sequence. Since two different time-of-flight measurements time-shifted by the inter-pulse timing are performed, the sensitivity or gain for the subsequent reflection of the subsequent laser pulse can be adjusted. Such an adjustment can be a reduction of the sensitivity or gain of the detector after a preceding reflection has saturated the detector, or an increase of the sensitivity or gain of the detector after no reflection was detected for a laser pulse by the detector, for example. The two sequential laser pulses are directed in the same direction in the field of view in order to have a high probability to hit the same target or object. Accordingly, the dynamic range and the performance of the lidar can be increased.

In an advantageous embodiment, it is proposed that the control unit is adapted to adjust the laser power of the at least one laser source after the detection of a reflection of a laser pulse for the at least one subsequent laser pulse of the sequence. For example, the laser power can be adjusted by adjusting the peak power and/or the mean power and/or the pulse width and/or the number of pulses, in particular per measurement point.

The at least two different time-of-flight measurements time-shifted by the inter-pulse timing allow the laser power to be adjusted accordingly, so that the pulse energy of the subsequent pulse is suitable for the range and reflectance of the target.

Preferably, a sequence of laser pulses is directed to the same vector in the field of view. An object or target in the field of view can preferably be illuminated by at least two laser pulses of the same sequence.

Further preferably, the inter-pulse timing of two sequential laser pulses is at maximum 50 ns and/or the inter-pulse timing of two sequential laser pulses is at least 20 ns. The short period of time between two sequential laser pulses enables subsequent time-of-flight measurements to be performed on the same object or target in quick succession. In this short time period, the relative movement between a detected object and the lidar system or an ego-vehicle equipped with the lidar system is within reasonable tolerances with respect to influences on the time-of-flight of the laser pulses in order to determine whether the detected sequential reflections have a same inter-pulse timing. Further, the minimum inter-pulse timing allows to separate the reflected laser impulse and to provide a reasonable tolerance.

It is proposed that the sequence has a duration of at maximum 100 ns, preferably at maximum 50 ns. Thereby, it is possible to achieve a good resolution in the field of view while scanning the field of view in a suitable time frame.

In preferred embodiments, the length of the pulses is shorter than 5 ns, preferably shorter than 3 ns.

In a further development, it is proposed that the lidar system comprises a light sensor different from the at least one detector. The light sensor different from the at least one detector is preferably an omnidirectional light sensor. The light sensor can be used to detect external interference, which could be incorporated in the evaluation of the measurements by the control unit in order to identify false positives.

In order to solve the task of the invention a method to operate a lidar system is proposed wherein the lidar system comprises at least one laser source emitting laser pulses and directing said laser pulses in a field of view, at least one detector detecting reflections of said laser pulses, and a control unit performing time-of-flight measurements on said laser pulses and the detected reflections. It is proposed that the control unit controls the at least one laser source to emit sequences of laser pulses with at least two sequential laser pulses with a defined inter-pulse timing, wherein the at least one detector detects the inter-pulse timing of the reflections of said laser pulses, wherein the control unit determines whether the detected reflections have the same inter-pulse timing as the at least two sequential laser pulses.

In an advantageous embodiment, the lidar system comprises an optical device which optical device is configured to direct the laser pulses of one or more laser sources in the field of view. The optical device is preferably a scanner or a lens system that directs the laser pulses in the field of view.

Preferably, the control unit determines whether the detected reflections have the same inter-pulse timing as the at least two sequential laser pulses.

In a preferred embodiment, the at least two sequential laser pulses with a defined inter-pulse timing of a sequence have a defined difference in pulse energy and/or pulse length, wherein the detector detects the energy and/or or length of the reflections of said laser pulses, wherein the control unit determines whether the detected reflections have a difference in energy and/or length corresponding to the least two sequential laser pulses.

In an advantageous embodiment, the control unit adjusts a sensitivity or gain setting of the at least one detector after the detection of a reflection of a laser pulse for the at least one subsequent reflection of the subsequent laser pulses of the sequence.

It is further proposed that a sequence of pulses is directed to the same vector in the field of view.

In the following the invention shall be illustrated on the basis of preferred embodiments with reference to the accompanying drawings, therein shows:
- Fig. 1: a schematic illustration of a lidar system;
- Fig. 2: a schematic illustration of another lidar system;
- Fig. 3: a sequence of emitted laser pulses over time; and
- Fig. 4: signals received by a detector over time.

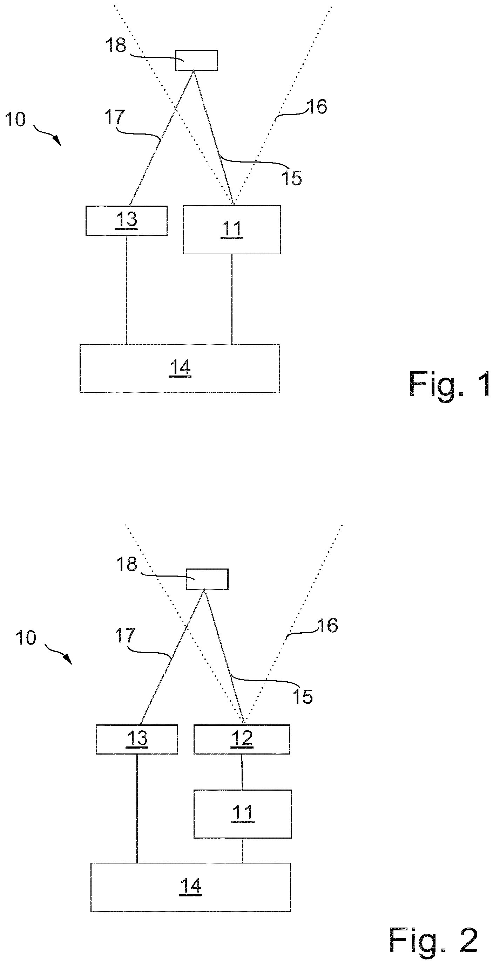

Figure 1 shows a schematic illustration of a lidar system 10, which comprises at least one laser source 11. The at least one laser source 11 is an array of laser sources, for example. Said at least one laser source 11 emits laser pulses 15 which are directed in the field of view 16 in order to create a spatial distribution so that the field of view 16 can be scanned. The lidar system 10 further comprises at least one detector 13 that detects the reflections 17 of the laser pulses 15 from objects 18 in the field of view 16 and a control unit 14. The at least one detector 13 can be a single detector 13 or an array of detectors 13. The control unit 14 is adapted to control the at least one laser source 11 and the at least one detector 13. Time-of-flight measurements are performed and thereby data points are generated with a range at a scanned vector in the field of view 16.

The laser source 11 is controlled by the control unit 14 which emits laser pulses 15. The laser pulses 15 are directed in a direction in the field of view 16, wherein a sequence comprises preferably two laser pulses 15 having the same or approximately the same direction. In this preferred embodiment, the laser pulses 15 are short pulses with a length of approximately 3 ns. The laser pulses 15 are part of a sequence that is emitted in a very limited time period, for example 100 ns, so that a complete sequence of at least two laser pulses 15 can be incident on the same object 18 at approximately the same distance and direction with respect to the lidar system 10. The laser pulses 15 are emitted with an inter-pulse timing 20 of 30 ns, for example.

In Figure 2 another schematic illustration of a lidar system 10 is shown, which comprises a laser source 11 and an optical device 12. In a preferred embodiment, the optical device 12 is a lens system that enables a spatial distribution of a laser flash of the laser source 11 in the field of view 16 and thus directing the laser pulses 15 in the field of view 16 simultaneously. In this case, the at least one detector 13 is preferably an array of detectors 13. In another preferred embodiment, the laser source 12 emits laser pulses 15 which are directed in the field of view 16 by the optical device 12, wherein the optical device is preferably a scanner. Thus, laser pulses 15 are directed in the field of view 16 in a serial manner. The lidar system 10 further comprises a detector 13 that detects the reflections 17 of the laser pulses 15 from objects 18 in the field of view 16 and a control unit 14. The detector 13 and the laser source 11 can be arranged biaxial or coaxial with respect to the optical path of the laser pulses 15 and the reflections 17. The control unit 14 is adapted to control the laser source 11, the optical device 12, which is a scanner in this advantageous embodiment, and the detector 13. Time-of-flight measurements are performed and thereby data points are generated with a range at a scanned vector in the field of view 16.

The laser source 11 is controlled by the control unit 14 which emits laser pulses 15. The laser pulses 15 are directed, in particular by the optical device 12, into a direction in the field of view 16, wherein a sequence comprises preferably two laser pulses 15. In this preferred embodiment, the laser pulses 15 are short pulses with a length of approximately 3 ns. The laser pulses 15 are part of a sequence that is emitted in a very limited time period, for example 100 ns, so that a complete sequence of at least two laser pulses 15 can be incident on the same object 18 at approximately the same distance and direction with respect to the lidar system 10. The laser pulses 15 are emitted with an inter-pulse timing 20 of 30 ns, for example.

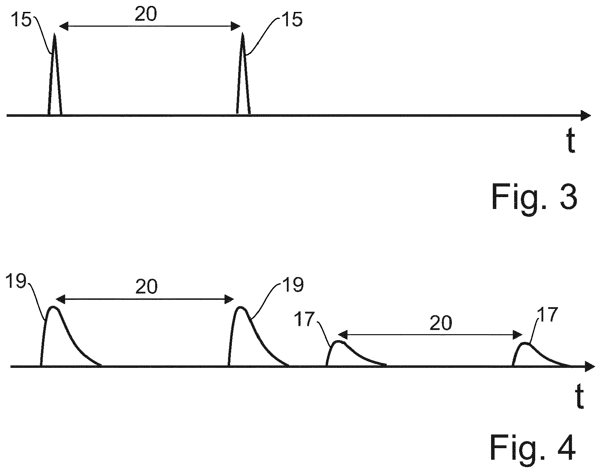

Figure 3 shows a diagram of the intensity of a sequence of laser pulses 15 over time t. The two laser pulses 15 have a dedicated inter-pulse timing 20, which is the period of time between the two laser pulses 15.

Figure 4 illustrates the signals received by the detector 13 over time. The two peaks on the left side are so-called zero pulses 19, which typically occur in coaxial lidar systems 10. Accordingly, the zero pulses 19 are the direct measurement of the emitted laser pulses 15 and are to be neglected but they can blind the detector 13 for a certain time. The zero pulses 19 have the same inter-pulse timing 20 as the emitting laser pulses 15 of the sequence.

In a typical scenario the emitted laser pulses 15 are reflected by an object 18 in the field of view 16. Since the two laser pulses 15 are emitted in a quick succession and are directed in the same or approximately the same vector, for example, by the optical device 12 due to the short inter-pulse timing 20, both laser pulses 15 are supposed to have the same time-of-flight or in other words lead to the same results of the time-of-flight measurements. Thereby, the reflections 17 of an object 18 have the same inter-pulse timing 20 as the emitted laser pulses 15. The values of the inter-pulse timing 20 can be compared by the control unit 14 in order to rule out false positive detections of objects 18. For example, if the values of the inter-pulse timing 20 differ or just one reflection 17 is received, it is likely that this data point is a false positive from an external source. As such a sequence is emitted in every vector to be measured in the field of view 16, the data points generated provide a higher confidence and the lidar system 10 is more robust to external interference.

In a preferred embodiment, the lidar system 10 is further adapted to detect two reflections 17 with different gains of the detector 13. For example, the gain can be set higher after the first reflection 17 is received for the following reflection 17 which is to be expected in a certain time period corresponding to the inter-pulse timing 20 of the emitting laser pulses 15.

Further on, in a preferred embodiment, the laser pulses 15 of a sequence having said inter-pulse timing 20 have different pulse energies, so that the robustness to external interference and the dynamic range of the lidar system 10 are further increased.

## Claims

1. A lidar system (10) comprising:
- at least one laser source (11) configured to emit laser pulses (15) and to direct said laser pulses (15) in a field of view (16),
- at least one detector (13) configured to detect reflections (17) of said laser pulses (15),
- a control unit (14) configured to perform time-of-flight measurements on said laser pulses (15) and the detected reflections (17), **characterized in that**
- the control unit (14) is configured to control the at least one laser source (11) to emit sequences of laser pulses (15) with at least two sequential laser pulses (15) with a defined inter-pulse timing, wherein
- the at least one detector (13) is adapted to detect the inter-pulse timing (20) of the reflections (17) of said laser pulses (15), wherein
- the control unit (14) is configured to determine whether the detected reflections (17) have the same inter-pulse timing (20) as the at least two sequential laser pulses (15).

2. Lidar system (10) according to claim 1, wherein
- the at least one detector (13) is adapted to detect the at least two sequential reflections (17) each with a different sensitivity or gain setting.

3. Lidar system (13) according to claims 1 or 2, wherein
- the at least two sequential laser pulses (15) with a defined inter-pulse timing (20) of a sequence have a defined difference in pulse energy and/or pulse length, wherein
- the at least one detector (13) is adapted to detect the energy and/or or length of the reflections (17) of said laser pulses (15), wherein
- the control unit (14) is configured to determine whether the detected reflections (17) have a difference in energy and/or length corresponding to the least two sequential laser pulses (15).

4. Lidar system (10) according to any one of the preceding claims, wherein
- the control unit (14) is adapted to adjust a sensitivity or gain setting of the at least one detector (13) on the basis of a detection of a reflection (17) of a laser pulse (15) for the at least one subsequent reflection (17) of the subsequent laser pulse (15) of the sequence.

5. Lidar system (10) according to any one of the preceding claims, wherein
- the control unit (14) is adapted to adjust the laser power of the at least one laser source (11) after the detection of a reflection (17) of a laser pulse (15) for the at least one subsequent laser pulse (15) of the sequence.

6. Lidar system (10) according to any one of the preceding claims, wherein
- a sequence of laser pulses is directed to the same vector in the field of view.

7. Lidar system (10) according to any one of the preceding claims, wherein
- the inter-pulse timing (20) of two sequential laser pulses (15) is at maximum 50 ns and/or
- the inter-pulse timing (20) of two sequential laser pulses (15) is at least 20 ns.

8. Lidar system (10) according to any one of the preceding claims, wherein
- the sequence has a duration of at maximum 100 ns, preferably at maximum 50 ns.

9. Lidar system (10) according to any one of the preceding claims, wherein
- the length of the pulses is shorter than 5 ns, preferably shorter than 3 ns.

10. Lidar system (10) according to any one of the preceding claims, wherein
- the lidar system (10) comprises a light sensor different from the at least one detector (13).

11. Method to operate a lidar system (10), wherein the lidar system (10) comprises
- at least one laser source (11) emitting laser pulses (15) and directing said laser pulses (15) in a field of view (16),
- at least one detector (13) detecting reflections (17) of said laser pulses (15),
- a control unit (14) performing time-of-flight measurements on said laser pulses (15) and the detected reflections (17), **characterized in that**
- the control unit (14) controls the at least one laser source (11) to emit sequences of laser pulses (15) with at least two sequential laser pulses (15) with a defined inter-pulse timing (20), wherein
- the at least one detector (13) detects the inter-pulse timing (20) of the reflections (17) of said laser pulses (15), wherein
- the control unit (14) determines whether the detected reflections (17) have the same inter-pulse timing (20) as the at least two sequential laser pulses (15).

12. Method according to claim 11, wherein
- the control unit (14) determines whether the detected reflections (17) have the same inter-pulse timing (20) as the at least two sequential laser pulses (15).

13. Method according to claims 11 to 12, wherein
- the at least two sequential laser pulses (15) with a defined inter-pulse timing (20) of a sequence have a defined difference in pulse energy and/or pulse length, wherein
- the at least one detector (13) detects the energy and/or or length of the reflections (17) of said laser pulses (15), wherein
- the control unit (14) determines whether the detected reflections have a difference in energy and/or length corresponding to the least two sequential laser pulses (15) .

14. Method according to claims 11 to 13, wherein
- the control unit (14) adjusts a sensitivity or gain setting of the at least one detector (13) after the detection of a reflection of a laser pulse (15) for the at least one subsequent reflection (17) of the subsequent laser pulses (15) of the sequence.

15. Method according to claims 11 to 14, wherein
- a sequence of pulses (15) is directed to the same vector in the field of view (16).
